# EUROPEAN PATENT APPLICATION

(11) **EP 3 998 247 A1**
(43) Date of publication of application: **18.05.2022**
(21) Application number: 20837246.6
(22) Date of filing: 08.07.2020
(51) Int. Cl.: C05F 3/00, C05F 5/00, C05F 15/00

(54) **COMPOST AND METHOD FOR PRODUCING COMPOST**

(30) Priority: 09.07.2019 JP 2019127293
(71) Applicant: Shikoku Cage Co., Ltd., Shikokuchuo-shi, Ehime 799-0705 (JP)
(72) Inventor: IKAWA Shigeki, Shikokuchuou-shi, Ehime 799-0705 (JP)
(74) Representative: White, Duncan Rohan
(86) International application number: PCT/JP2020/026625
(87) International publication number: WO 2021/006285

(57) **Abstract**

A compost according to an embodiment to which the present invention is applied is a compost obtained by fermenting an organic waste, including: a first organic waste containing livestock or poultry dung; a second organic waste containing a fibrous organic waste different from the first organic waste; a first additive containing an iron compound; and a second additive containing at least one of boric acid and silicic acid, which are mixed and fermented. Such a compost can have a significantly reduced malodor and a good growth effect as compared with a conventional compost.

## Description

### TECHNICAL FIELD

The present invention relates to a compost made of organic waste including livestock or poultry dung, coffee grounds and the like, and a compost production method.

### BACKGROUND ART

Conventionally, dung of livestock or poultry becomes organic waste containing a large amount of organic matter in addition to components such as nitrogen, phosphoric acid, potassium and the like, and is used as a raw material for compost subjected to a fermentation treatment. However, a compost using dung of livestock or the like as a raw material has a problem that a place of fermentation treatment and a place of use of the compost are limited because malodor is generated during or after the fermentation treatment. Therefore, in order to reduce generation of malodor, there is a compost production method in which wood chips or the like are mixed with dung of livestock or the like to promote a fermentation treatment (for example, see Patent Literature 1).

Conventionally, coffee grounds, tea grounds, and the like discharged from beverage makers have been used as an organic waste different from dung of livestock or the like and used as raw materials for compost and the like. In particular, coffee grounds contain soluble nitrogen-free substances (52 to 54%), and attempts have been made to utilize the coffee grounds as agricultural fertilizers. However, because of their high content ratio of carbon to nitrogen (hereinafter referred to as C/N ratio) of about 30, there has been a problem that when the coffee grounds are used directly in soil, an amount of non-functional nitrogen decreases with rapid proliferation of microorganisms in the soil, so that growth of crops is hindered. Therefore, there is a compost production method in which, when coffee grounds are used as a raw material for compost or the like, a C/N ratio is lowered by performing aerobic fermentation for a long period of time such as 90 days or more, to compost the coffee grounds.

### CITATION LIST

### PATENT LITERATURE

Patent Literature 1: JP 2008-13380 A

### SUMMARY OF THE INVENTION

### PROBLEMS TO BE SOLVED BY THE INVENTION

However, the compost production method using organic waste which is dung of livestock or the like as described above and the produced compost have been room for further reducing malodor since the malodor is not sufficiently reduced. In addition, the compost production method using organic waste such as coffee grounds and the like as described above and the produced compost have had problems that malodor due to generation of mold and decay in the fermentation treatment occurs since the coffee grounds and the like contain large amounts of nitrogen and moisture. That is, it has been desired to further reduce malodor in the compost production method using organic waste such as dung of livestock or the like and coffee grounds or the like and the produced compost. Therefore, an object of the present invention is to provide a compost having a significantly reduced malodor and a good growth effect on crops due to use of organic waste such as dung of livestock or the like and coffee grounds and the like, and a compost production method.

### SOLUTION TO THE PROBLEMS

The present invention has been made to solve at least a part of the above-described problems, and can be realized as the following application examples. Note that reference signs in parentheses, supplementary explanation, and the like in this column indicate correspondence relationships with embodiments which will be described later in order to help understanding of the present invention, and do not limit the present invention at all.

A compost of Application Example 1 to which the present invention is applied is a compost obtained by fermenting an organic waste, the compost including:
a first organic waste containing livestock or poultry dung;
a second organic waste containing a fibrous organic waste different from the first organic waste;
a first additive containing an iron compound; and
a second additive containing at least one of boric acid and silicic acid
   which are mixed and fermented.

In the compost of Application Example 1,
the second organic waste contains coffee grounds as the fibrous organic waste, and an amount of the second organic waste is 20 to 28 parts by mass based on 100 parts by mass of the first organic waste,
an amount of the first additive is 3 to 5 parts by mass based on 100 parts by mass of the second organic waste, and
an amount of the second additive is 3 to 25 parts by mass based on 100 parts by mass of the second organic waste.

Furthermore, a compost production method for the compost of Application Example 1 or Application Example 2 includes carrying out:
a mixture generation step of generating a mixture in which the second organic waste,
the first additive and the second additive are mixed; and
a fermentation step of mixing and aerobically fermenting the mixture generated in the mixture generation step and the first organic waste.

### BRIEF DESCRIPTION OF THE DRAWINGS

Fig. 1 is a flowchart showing a compost production method according to the present embodiment.
Fig. 2 is a table illustrating a mass and a mass ratio of each raw material component in a compost of Example 1.

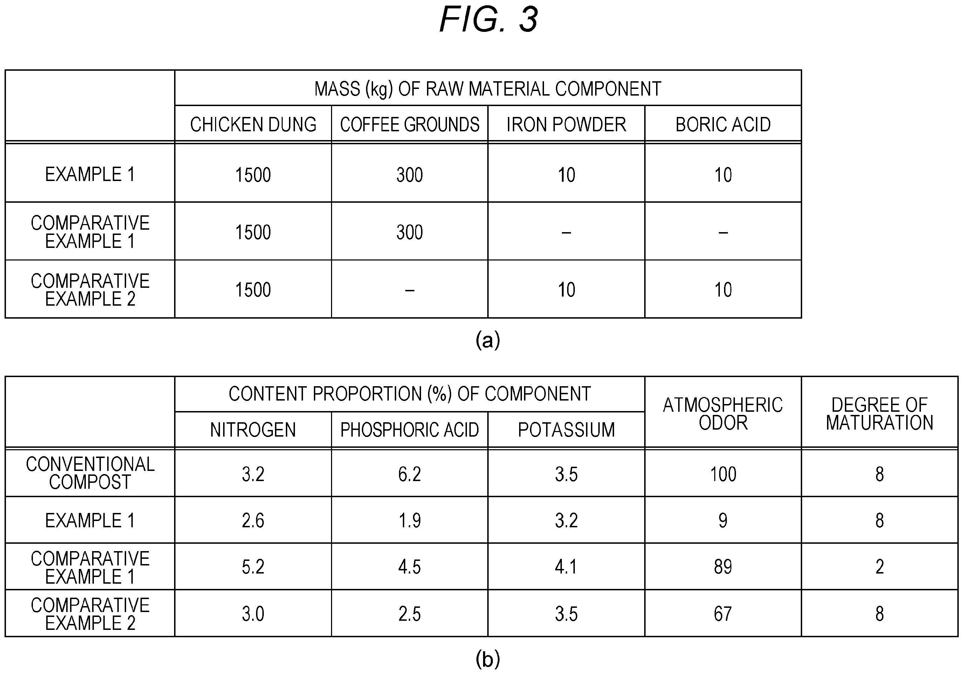

Fig. 3(a) is a table illustrating masses of each raw material component of a compost of Example 1, a compost of Comparative Example 1, and a compost of Comparative Example 2, and Fig. 3(b) is a table illustrating content proportions of nitrogen, phosphoric acid, and potassium in each of the compost of Example 1, a conventional compost, the compost of Comparative Example 1, and the compost of Comparative Example 2, and results of analysis on an atmospheric odor and a degree of maturation of each of the compost of Example 1, the conventional compost, the compost of Comparative Example 1, and the compost of Comparative Example 2.

### DESCRIPTION OF THE EMBODIMENTS

Hereinafter, embodiments to which the present invention is applied will be described. Note that the embodiments of the present invention are not limited by the following examples at all, and can take various forms as long as they fall within the technical scope of the present invention.

### <Compost production method according to the present embodiment

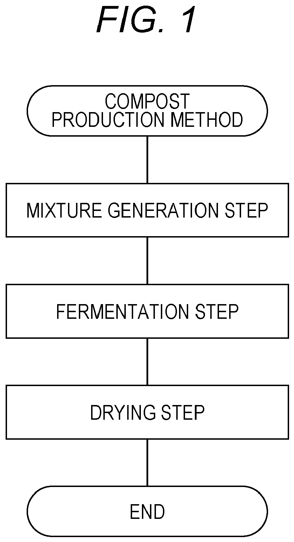

A compost production method according to the present embodiment will be described below with reference to Fig. 1. Fig. 1 is a flowchart of a compost production method according to the present embodiment. The compost of the present embodiment is produced using, as raw materials, dung of livestock or the like as a first organic waste, a fibrous organic waste as a second organic waste, an iron compound as a first additive, and at least one or both of boric acid and silicic acid as a second additive.

In addition, in a mixture in a bone-dry state, the first additive is blended in an amount of 0.1 to 50 parts by mass and the second additive is blended in an amount of 0.01 to 50 parts by mass based on 100 parts by mass of the second organic waste. In particular, the second additive is preferably blended, for example, in an amount of 0.01 to 50 parts by mass in the case of containing only boric acid, in an amount of 0.04 to 50 parts by mass in the case of containing only silicic acid, and in an amount of 0.1 to 4 parts by mass in the case of containing boric acid and silicic acid. More preferably, these raw materials in a bone-dry state are blended such that an amount of the mixture is 20 to 28 parts by mass based on 100 parts by mass of the first organic waste. In the mixture in a bone-dry state, the first additive is blended in an amount of 3 to 5 parts by mass, and the second additive is blended in an amount of 3 to 25 parts by mass (for example, the second additive is preferably blended in an amount of 3 to 5 parts by mass when containing only boric acid, in an amount of 17 to 20 parts by mass when containing only silicic acid, and in an amount of 20 to 25 parts by mass when containing boric acid and silicic acid) based on 100 parts by mass of the second organic waste.

As shown in Fig. 1, in the compost production method of the present embodiment, first, a mixture generation step of generating the mixture in which the second organic waste, the first additive and the second additive are mixed is carried out. Next, a fermentation step of mixing the first organic waste, the mixture composed of the second organic waste, the first additive and the second additive, and a fermentation material in a fermentation apparatus and performing an aerobic fermentation treatment for about 30 days is carried out. In the fermentation step in this fermentation apparatus, the treatment is performed until a water content (for example, about 60 to 70%) of the object to be treated reaches about 40 to 45%. Then, a drying step of performing drying by a dryer or the like is carried out after the fermentation step, and the treatment is performed until the water content reaches 15 to 35%, whereby the compost of the present embodiment is produced. In a mass ratio between the first organic waste and the mixture (mass ratio in a moisture-containing state (non-bone-dry state)), the mixture is preferably blended in an amount 40 parts by mass or less based on 100 parts by mass of the first organic waste.

The dung of livestock or the like, which is the first organic waste of the present embodiment, is discharged from a barn of cows, pigs, chickens, sheep, goats, horses, or the like. The dung of livestock or the like may be used as it is when used as the first organic waste, or may be used in a state where the water content is reduced through the drying step or the like.

The fibrous organic waste, which is the second organic waste of the present embodiment, is coffee grounds, tea grounds, squeezed pomace of fruits or vegetables (for example, residue of citrus fruits), or the like discarded from a beverage maker or the like, and is fibrous. Here, in particular, as the coffee grounds, coffee grounds discarded after extraction of coffee are preferable, but coffee beans (seeds of coffee trees of arabica, robusta, liberica, and the like) themselves, roasted coffee beans, crushed coffee beans, dried coffee beans, powdered coffee beans, or the like may be used. Note that coffee grounds or the like discarded from a beverage maker or the like may be used as they are when used as the second organic waste, or may be used in a state where the water content is reduced through the drying step and the like. In addition, the roasted coffee beans include coffee beans roasted by various methods such as home roasting, hot air roasting, infrared roasting, microwave roasting, superheated steam roasting, low temperature roasting or the like. Furthermore, the crushed coffee beans include coffee beans ground by various devices such as a coffee mill, a grinder, a stone mill or the like, and also include coffee beans ground in a coarsely ground state and a powder state. The second organic waste is preferably powdered with a small particle size, from the viewpoint of reaction efficiency with the first additive or the second additive which will be described later.

The iron compound as the first additive of the present embodiment is, for example, a water-soluble iron compound such as iron (III) chloride, iron (III) sulfate or the like, an insoluble iron compound such as iron (III) oxide, iron (III) nitrate, iron (III) hydroxide or the like, or a combination of two or more of these iron compounds. In addition, in place of the iron compound, a soil containing a large amount of an allophenic iron component such as red ball earth, Kanuma pumice, loam or the like, a soil containing an amorphous mineral (in particular, goethite), a natural product such as heme iron, seashells or the like, or the like may be used as the first additive. Furthermore, not only a solid substance as described above, but also a solution in which iron ore (natural iron ore such as pyrite, marcasite, siderite, magnetite, goethite or the like), an iron material (metallic iron), or red clay (soil containing a large amount of iron oxide (III) such as laterite or the like) is dissolved in an acidic solution, an aqueous solution containing a trivalent iron ion in which a water-soluble iron compound is dissolved, or the like may be used as the first additive.

A material containing boric acid as the second additive of the present embodiment is borax, boric acid, sodium boron oxide, zinc borate, disodium octaborate tetrahydrate, or a combination of two or more of these materials. In addition, amaterial containing silicic acid as the second additive of the present embodiment is an inorganic silicon compound such as silicic acid and a salt thereof, orthosilicic acid and a salt thereof, metasilicic acid and a salt thereof, disilicic acid and a salt thereof, trisilicic acid and a salt thereof, polysilicic acid and a salt thereof, silicon dioxide, or a combination of two or more of these inorganic silicon compounds.

The fermentation material of the present embodiment contains an aerobic fermentative bacterium or a complex microorganism composed of yeast, a lactic acid bacterium, and Bacillus subtilis natto, and is, for example, "Ehime AI-1 (registered trademark)" or the like. As for the mass ratio of the fermentation material blended in the fermentation step described above in a bone-dry state, the fermentation material is blended in an amount of 1 to 5 parts by mass based on 100 parts by mass of the first organic waste.

In the fermentation apparatus in the fermentation treatment of the present embodiment, a stirrer, a blower, and the like are provided in a fermentation lane. The stirrer stirs an object to be subjected to the fermentation treatment so as to generate voids into which air enters, and the blower operates so that a temperature during the fermentation treatment is 60°C or higher in order to promote aerobic fermentation.

### <Example 1>

Next, with reference to Fig. 1, a compost of Example 1, which is one example of the compost of the present embodiment, will be described. Fig. 1 is a table showing a mass and a mass ratio of each raw material component in the compost of Example 1. As shown in Fig. 1, the compost of Example 1 was produced by the above-described production method using 1500 kg (450 kg in a bone-dry state) of chicken dung as the first organic waste, 300 kg (234 kg in a bone-dry state) of coffee grounds as the second organic waste, 10 kg (10 kg in a bone-dry state) of iron powder (for example, powdered iron oxide (III)) as the first additive, and 10 kg (10 kg in a bone-dry state) of boric acid as the second additive as raw materials. In the fermentation step of the production method for the compost of Example 1, 10 L of "Ehime AI-1 (registered trademark)" (a solution, 0.04 kg in a bone-dry state) as the fermentation material was mixed. In such a compost of Example 1, generation of mold was not visually observed, and malodor was significantly reduced as compared with that of a conventional compost. The mass ratios of the raw material components in a bone-dry state are: 66.7 parts by mass for coffee grounds as the second organic waste, 2.22 parts by mass for iron powder as the first additive, and 2.22 parts by mass for boric acid as the second additive, based on 100 parts by mass of chicken dung as the first organic waste.

### <Analysis results of atmospheric odor and ripeness>

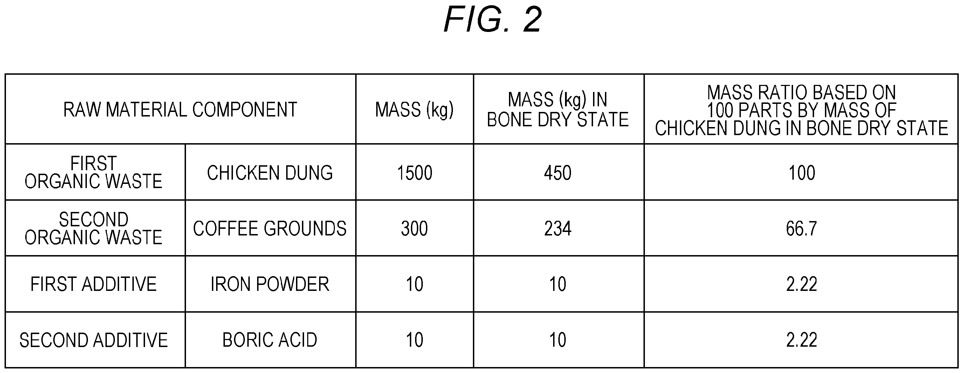

Next, with reference to Figs. 2(a) and 2(b), the analysis on an atmospheric odor and a degree of maturation of the compost of Example 1 will be described. Fig. 2(a) is a table showing masses of each raw material component of the compost of Example 1, the compost of Comparative Example 1, and the compost of Comparative Example 2, and Fig. 2(b) is a table showing content proportions of nitrogen, phosphoric acid, and potassium in each of the compost of Example 1, the conventional compost, the compost of Comparative Example 1, and the compost of Comparative Example 2, and results of analysis on an atmospheric odor and a degree of maturation of each of the compost of Example 1, the conventional compost, the compost of Comparative Example 1, and the compost of Comparative Example 2. The conventional compost shown in Fig. 2(b) is a compost made of chicken dung as a raw material, and does not use the second organic waste (such as coffee grounds or the like), the first additive (such as iron compound or the like), and the second additive (such as boric acid or the like) as a raw material, unlike the compost of Example 1.

As shown in Fig. 2(a), the compost of Comparative Example 1 was produced using 1500 kg of chicken dung as the first organic waste and 300 kg of coffee grounds as the second organic waste as raw materials. It is noted that in the compost of Comparative Example 1 as well, 10 L of "Ehime AI-1 (registered trademark)"was mixed as the fermentation material in the fermentation step, as in the compost of Example 1. That is, unlike the compost of Example 1, the compost of Comparative Example 1 is a compost which does not use iron powder as the first additive or boric acid as the second additive as a raw material.

As shown in Fig. 2(a), the compost of Comparative Example 2 was produced using 1500 kg of chicken dung as the first organic waste, 10 kg of iron powder as the first additive, and 10 kg of boric acid as the second additive as raw materials. It is noted that in the compost of Comparative Example 2 as well, 10 L of "Ehime AI-1 (registered trademark)"was mixed as the fermentation material in the fermentation step, as in the compost of Example 1. That is, unlike the compost of Example 1, the compost of Comparative Example 2 is a compost which does not use coffee grounds as the second organic waste as a raw material.

Here, a method for analyzing the content proportions of nitrogen, phosphoric acid, and potassium in the compost and a method for analyzing the atmospheric odor and the degree of maturation in the compost will be described. First, the content proportions of nitrogen, phosphoric acid, and potassium in the compost are numerical values calculated based on the measured values according to Soil Environment Analysis Method, Chapter V, 14.A and ICP Emission Spectrometry.

Next, the method for analyzing the atmospheric odor is a method in which an odor sensory test, which is concentration measurement by a three-point comparative odor bag method, is conducted by three in-house panels. Specifically, as a sample for the odor sensory test, a sample obtained by filling 10 g of a compost put in a 3-L sealed bag with odor-free air and allowing the bag to stand at room temperature for 24 hours was used. In addition, results of the analysis on the atmospheric odor are values obtained by calculating, as a ratio, a numerical value of each of the composts of Example 1, Comparative Example 1, and Comparative Example 2 with respect to a measured value, which is a numerical value calculated from a logarithmic average of dilution ratios that can be sensed in the odor sensory test, assuming that the numerical value of the conventional compost as a reference is 100.

The method for analyzing the degree of maturation is a method based on a method for determining the degree of maturation of the compost through simple determination of a carbon dioxide release rate. This is an analysis method based on the facts that it is clear that the carbon dioxide release rate and the degree of maturation (decay ripeness) of the compost are highly correlated, and that the degree of maturation (decay ripeness) can be determined from the carbon dioxide release rate. Specifically, the method for analyzing the degree of maturation is a method in which a test paper (a filter paper immersed in a sodium hydroxide solution to which a phenolphthalein liquid is added) sealed in a sealed container containing 10 g of a compost is allowed to stand for 40 minutes and then a degree of discoloration of the test paper is determined by 3 in-house panels. In addition, results of the analysis on the degree of maturation were evaluation values of 10-grade evaluation on a change in color in the test paper, for example, white (degree of maturation: 0) to pink (degree of maturation: 5) to red (degree of maturation: 10) because as the degree of maturation of the compost was higher, the redness of the test paper was increased based on the fact that phenolphthalein (red) was decolorized when the pH due to sodium hydroxide decreased upon absorption of carbon dioxide in the test paper.

As shown in Fig. 2(b), the conventional compost had content proportions of the components, nitrogen, phosphoric acid, and potassium of 3.2%, 6.2%, and 3.5%, respectively, an atmospheric odor of 100 as a reference value, and a degree of maturation of 8. The compost of Example 1 had content proportions of the components, nitrogen, phosphoric acid, and potassium of 2.6%, 1.9%, and 3.2%, respectively, an atmospheric odor of 9, and a degree of maturation of 8. The compost of Comparative Example 1 had content proportions of the components, nitrogen, phosphoric acid, and potassium of 5.2%, 4.5%, and 4.1%, respectively, an atmospheric odor of 89, and a degree of maturation of 2. The compost of Comparative Example 2 had content proportions of the components, nitrogen, phosphoric acid, and potassium of 3.0%, 2.5%, and 3.5%, respectively, an atmospheric odor of 67, and a degree of maturation of 8.

As described above, based on the content proportions of nitrogen, phosphoric acid, and potassium in each compost shown in Fig. 2(b), the compost of Example 1 had substantially the same content proportions of nitrogen and potassium as the conventional compost, but had a smaller content proportion of phosphoric acid than the conventional compost. Further, the compost of Example 1 had substantially the same content proportions of nitrogen and potassium as the composts of Comparative Examples 1 and 2, but had a smaller content proportion of phosphoric acid than the composts of Comparative Examples 1 and 2. Further, based on the results of the analysis on the atmospheric odor and the degree of maturation based on comparison among the respective composts shown in Fig. 2(b), the compost of Example 1 had the same degree of maturation as the conventional compost, but an atmospheric odor reduced by 90% or more. The compost of Example 1 had a reduced atmospheric odor as compared with the composts of Comparative Examples 1 and 2. In the compost of Comparative Example 1, unlike the compost of Example 1, the fermentation treatment in the anaerobic fermentation was performed without the temperature reaching 60°C or higher in the fermentation treatment in the fermentation step. An ammonia odor during and after the fermentation treatment was reduced as compared with that of the conventional compost, but a miso (soybean paste) odor was stronger than that of the compost of Example 1. In addition, in the compost of Comparative Example 2, similarly to the compost of Example 1, the fermentation treatment in the aerobic fermentation was performed in a state where the temperature reached 60°C or higher in the fermentation treatment in the fermentation step, but the compost had a lower degree of maturation than the compost of Example 1 and the like, and had malodor during and after the fermentation treatment reduced as compared with the conventional compost.

### <Characteristics of the present embodiment>

The compost of the embodiment as described above can be a compost obtained by mixing and fermenting dung of livestock or the like as the first organic waste, a fibrous organic waste as the second organic waste, an iron compound as the first additive, and at least one or both of boric acid and silicic acid as the second additive. The compost of such an embodiment can have a significantly reduced malodor as compared with the conventional compost. In addition, the compost of such an embodiment can have a good growth effect on crops since the iron component of the iron compound, boric acid, and silicic acid are effective components of a fertilizer. In particular, the iron compound as the first additive is known to have a deodorizing effect, and, as shown in Fig. 2(b), it can be inferred that the compost of the present embodiment contains the first additive and thus has a further reduced malodor. In addition, boric acid and silicic acid as the second additive are known to have an antifungal effect and a preservative effect, and, as shown in Fig. 2(b), it can be inferred that the compost of the present embodiment contains the second additive and thus has a further reduced malodor.

Further, the compost of the embodiment as described above can be a compost in which the second organic waste contains coffee grounds as the fibrous organic waste, and an amount of the second organic waste is 20 to 28 parts by mass based on 100 parts by mass of the first organic waste, an amount of the first additive is 3 to 5 parts by mass based on 100 parts by mass of the second organic waste, and an amount of the second additive is 3 to 25 parts by mass based on 100 parts by mass of the second organic waste. The compost of such an embodiment can have a significantly reduced malodor as compared with the conventional compost. In particular, the coffee grounds, which are the fibrous organic waste as the second organic waste, are porous substances and have a deodorizing effect, and thus, as shown in Fig. 2(b), it can be inferred that the compost of the present embodiment contains the coffee grounds, which are the first additive, and thus has a further reduced malodor. In addition, the coffee grounds which are porous substances can retain air and a fermentative bacterium for aerobic fermentation, and thus have an effect of promoting good aerobic fermentation in the fermentation step. Furthermore, since the compost of the present embodiment contains the iron compound, boric acid, and silicic acid which are known to have an antifungal effect and a preservative effect, it is possible to suppress generation of mold and decay in the coffee grounds that are the second organic waste, so that malodor can be further reduced.

Furthermore, the compost production method of the embodiment as described above can be a compost production method including carrying out: a mixture generation step of generating a mixture in which the second organic waste, the first additive and the second additive are mixed; and a fermentation step of mixing and aerobically fermenting the mixture generated in the mixture generation step and the first organic waste. According to such a compost production method, a mixture in which an iron compound, boric acid, and the like are mixed with coffee grounds that easily generate mold or decay is produced, and thus generation of mold and decay in the coffee grounds can be further suppressed, so that malodor can be significantly reduced.

### <Other embodiments>

In the present embodiment described above, in the fermentation step of the compost production method, the mixture generated in the mixture generation step is mixed with the first organic waste. However, the mixture may be mixed with the first organic waste in a state of being divided into predetermined amounts. Specifically, 50 to 5000 g of the mixture may be enclosed in packaging materials of a biodegradable film, and the packaging materials in which the mixture is enclosed may be mixed with the first organic waste in the fermentation step. When such packaging materials in which the mixture is enclosed are used, the mixture is more easily uniformly mixed with the first organic waste than when such packaging materials are not used, and thus malodor can be further reduced. The packaging materials are made of a biodegradable film, and thus are degraded in the fermentation treatment in the fermentation step and do not impair the effect of the active ingredient on crop growth in the compost.

In the present embodiment described above, the compost is produced through the mixture generation step, the fermentation step, and the drying step in the compost production method. However, a molding step in which the compost is molded into pellets having a predetermined shape may be carried out after the drying step. Specifically, in the molding step after the drying step, a glue or the like as a water-soluble organic adhesive component may be mixed with the compost subjected to the drying step, and the compost may be fitted into a mold having a predetermined shape to be molded into pellets. The pellet-shaped compost produced through such a molding step can be easily used when the compost is scattered, as compared with a conventional coarsely-grained compost.

The present invention has been described based on the embodiments, but the above-described embodiments of the invention are intended for facilitating understanding of the present invention, and do not limit the present invention. The present invention can be modified and improved without departing from the spirit thereof and the scope of the claims, and includes equivalents thereof.

## Claims

1. A compost obtained by fermenting an organic waste, the compost comprising:
a first organic waste containing livestock or poultry dung;
a second organic waste containing a fibrous organic waste different from the first organic waste;
a first additive containing an iron compound; and
a second additive containing at least one of boric acid and silicic acid,
which are mixed and fermented.

2. The compost according to claim 1, wherein
the second organic waste contains coffee grounds as the fibrous organic waste, and an amount of the second organic waste is 20 to 28 parts by mass based on 100 parts by mass of the first organic waste,
an amount of the first additive is 3 to 5 parts by mass based on 100 parts by mass of the second organic waste, and
an amount of the second additive is 3 to 25 parts by mass based on 100 parts by mass of the second organic waste.

3. A compost production method for the compost according to claim 1 or 2, the compost production method comprising carrying out:
a mixture generation step of generating a mixture in which the second organic waste, the first additive, and the second additive are mixed; and
a fermentation step of mixing and aerobically fermenting the mixture generated in the mixture generation step and the first organic waste.

## Amended claims

### Amended claims under Art. 19.1 PCT

**1.** A compost obtained by fermenting an organic waste, the compost comprising:
a first organic waste containing livestock or poultry dung;
a second organic waste containing coffee grounds which are a fibrous organic waste different from the first organic waste;
a first additive containing an iron compound; and
a second additive containing at least one of boric acid and silicic acid,
which are mixed and fermented.

**2.** The compost according to claim 1, wherein
an amount of the second organic waste is 20 to 28 parts by mass based on 100 parts by mass of the first organic waste,
an amount of the first additive is 3 to 5 parts by mass based on 100 parts by mass of the second organic waste, and
an amount of the second additive is 3 to 25 parts by mass based on 100 parts by mass of the second organic waste.

**3.** A compost production method for the compost according to claim 1 or 2, the compost production method comprising carrying out:
a mixture generation step of generating a mixture in which the second organic waste, the first additive, and the second additive are mixed; and
a fermentation step of mixing and aerobically fermenting the mixture generated in the mixture generation step and the first organic waste.
